# EUROPÄISCHE PATENTANMELDUNG

(11) **EP 1 500 840 A1**
(43) Veröffentlichungstag der Anmeldung: **26.01.2005**
(21) Anmeldenummer: 04010617.1
(22) Anmeldetag: 05.05.2004
(51) Int. Cl.: F16D 65/12

(54) **Innenbelüftete Bremsscheibe für eine Scheibenbremse**

(30) Priorität: 25.07.2003 DE 10333915
(71) Anmelder: AUDI AG, 85045 Ingolstadt (DE)
(72) Erfinder: Modlmayr, Johann, 86529 Schrobenhausen (DE)
(74) Vertreter: Asch, Konrad, Dipl.-Ing.

(57) **Zusammenfassung**

Die Erfindung betrifft eine innenbelüftete Bremsscheibe (10) für eine Scheibenbremse mit einem ersten und einem zweiten Ringkörper (12, 14) und einer in axialer Richtung (A) betrachteten dem ersten Ringkörper (12) zugeordneten vorderen Reibfläche (16) und einer dem zweiten Ringkörper (14) zugeordneten hinteren Reibfläche (18). Zwischen den beiden Ringkörpern (12, 14) sind in Umfangsrichtung mehrere, sich in radialer Richtung (R) erstreckende Kühlkanälen (20) angeordnet. Der erste Ringkörper (12) weist im Anschluss an die vordere Reibfläche (16) radial nach innen einen topfförmigen Anschlussbereich (22) für die Befestigung der Bremsscheibe (10) an eine Radnabe auf. Der zweite Ringkörper (14) ist im Anschluss an die hintere Reibfläche (18) radial nach innen durch eine innere Ringfläche (24), die in axialer Richtung (A) betrachtet durch eine vordere und einen hintere Ringflächenkante (26, 28) begrenzt ist, abgeschlossen. Die Erfindung zeichnet sich dadurch aus, dass die vordere Ringflächenkante (26) radial weiter außen als die hintere Ringflächenkante (28) angeordnet ist.

## Beschreibung

Die Erfindung betrifft eine innenbelüftete Bremsscheibe für eine Scheibenbremse gemäß der im Oberbegriff des Anspruches 1 angegebenen Art.

Derartige innenbelüftete Bremsscheiben sind hinreichend bekannt und finden beispielsweise in Kraftfahrzeugbremsen Verwendung. Bremsscheiben der gattungsgemäßen Art weisen hierbei einen ersten Ringkörper mit einer vorderen Reibfläche und einen zweiten Ringkörper mit einer hinteren Reibfläche sowie mehrere, zwischen den beiden Ringkörpern in Umfangsrichtung angeordnete, in radiale Richtung erstreckende, Kühlkanäle auf. Zur Befestigung der Bremsscheibe an einer Radnabe ist der erste Ringkörper radial nach innen als ein topfförmiger Anschlussbereich ausgebildet.

Ein wesentliches Problem derartiger innenbelüfteter Bremsscheiben besteht darin, dass bei feuchtem Fahrbahnbelag Spritzwasser vom Achsschenkel über die Nabe in den Topfbereich der Bremsscheibe und von dort auf die hintere Reibfläche des zweiten Ringkörpers der Bremsscheibe gelangen kann. Das auf die Reibfläche gelangte Spritzwasser erweist sich als äußerst nachteilig, da das Wasser den Reibwert zwischen Bremsbelag und Bremsscheibe dramatisch vermindert und dem Fahrer ein unsicheres Ansprechen der Bremse vermittelt wird.

Aus der DE 199 63 030 A1 ist bekannt, bei einer innenbelüfteten Bremsscheibe mit einer in der Bremstrommel angeordneten Innenbackenbremse ein Eindringen von Wasser auf die Lauffläche der Innenbackenbremse zu verhindern und einen gezielten Wasseraustritt zu gewährleisten. Hierzu ist in einem Reibring der Bremsscheibe ein Ringkanal mit zwei gegenüberliegenden Ringnuten vorgesehen. In den Ringkanal ragt ein schräg gestelltes Wasserführungsblech einer äußeren Abschirmung hinein, welches einerseits in einer Wassereintrittsposition das Spritzwasser sammelt und in einer Wasseraustrittsposition das aufgefangene Spritzwasser nach außen abgibt. Als Folge davon wird ein Eindringen von Spritzwasser auf die Lauffläche der Innenbackenbremse vermieden.

Da lediglich das Eindringen von Spritzwasser auf die Lauffläche der Innenbackenbremse vermieden wird, treten die bereits geschilderten Nachteile bei feuchtem Fahrbahnbelag, nämlich verminderter Reibwert zwischen Bremsbelag und Bremsscheibe aufgrund des Eindringens/Auf fließens von Spritzwasser auf die hintere Reibfläche des zweiten Ringkörpers der Bremsscheibe, entsprechend auch hier auf.

Der Erfindung liegt die Aufgabe zugrunde, eine innenbelüftete Bremsscheibe für eine Scheibenbremse gemäß der im Oberbegriff des Anspruches 1 angegebenen Art derart weiterzubilden, dass unter Vermeidung der genannten Nachteile ein Eindringen/Auffließen von Spritzwasser auf die hintere Reibfläche des zweiten Ringkörpers der Bremsscheibe vermieden wird und somit ein sicheres Ansprechen der Bremse auch bei Nässe gewährleistet ist.

Diese Aufgabe wird durch die kennzeichnenden Merkmale des Anspruches 1 in Verbindung mit seinen Oberbegriffsmerkmalen gelöst.

Die Unteransprüche bilden vorteilhafte Weiterbildungen der Erfindung.

Der Erfindung liegt die Erkenntnis zugrunde, dass auch bei feuchtem Fahrbahnbelag durch eine gezielte Vermeidung des Eindringens/Auffließens von Spritzwasser auf die hintere Reibfläche des zweiten Ringkörpers der Bremsscheibe ein nahezu konstanter Reibwert zwischen Bremsbelag und Bremsscheibe und somit ein sicheres Ansprechen der Bremse gewährleistet werden kann.

Nach der Erfindung weist die innenbelüftete Bremsscheibe für eine Scheibenbremse einen ersten und einen zweiten Ringkörper mit einer, in axialer Richtung betrachtet, dem ersten Ringkörper zugeordneten vorderen Reibfläche und einer dem zweiten Ringkörper zugeordneten hinteren Reibfläche und mehrere zwischen den beiden Ringkörpern in Umfangsrichtung angeordnete, in radiale Richtung erstreckende, Kühlkanäle auf. Der zweite Ringkörper weist im Anschluss an die hintere Reibfläche radial nach innen eine innere Ringfläche auf, die in axiale Richtung betrachtet durch eine vordere und eine hintere Ringflächenkante begrenzt ist. Erfindungsgemäß ist die vordere Ringflächenkante der inneren Ringfläche radial weiter außen als die hintere Ringflächenkante der inneren Ringfläche angeordnet. Durch die erfindungsgemäße Anordnung der vorderen und hinteren Ringflächenkante weist die innere Ringfläche ausgehend von der vorderen bis zur hinteren Ringflächenkante eine zunehmende radiale Erstreckung nach innen auf. Zur Befestigung der Bremsscheibe an eine Radnabe ist vorzugsweise der erste Ringkörper in radiale Richtung betrachtet im Anschluss an die vordere Reibfläche radial nach innen als ein topfförmiger Anschlussbereich ausgebildet.

Gelangt nun beispielsweise Spritzwasser vom Achsschenkel über die Nabe in den Topfbereich der Bremsscheibe und von dort auf die innere Ringfläche der Bremsscheibe, so wird aufgrund der zunehmenden radialen Erstreckung bzw. Ausgestaltung der innern Reibfläche, das Wasser zu der vorderen Ringflächenkante und von dort in den Kühlkanal gelenkt. Ein Auflaufen/Eindringen des Spritzwassers auf die hintere Reibfläche des zweiten Ringkörpers der Bremsscheibe wird aufgrund der Ausgestaltung der inneren Reibfläche erschwert bzw. gänzlich vermieden.

Gemäß einer Ausführungsform der Erfindung weist die innere Ringfläche im Bereich um die hintere Ringflächenkante eine radial nach innen ausgerichtete Stufe auf. Durch die radial nach innen ausgerichtete Stufe ist in der inneren Reibfläche im Bereich um die hintere Ringflächenkante eine zusätzliche Wasserscheidekante ausgebildet, die ein Auflaufen/Eindringen von Spritzwasser auf die Reibfläche der Bremsscheibe zusätzliche erschwert.

Da für die gezielte Vermeidung des Eindringens/Auflaufens von Spritzwasser auf die hintere Reibfläche des zweiten Ringkörpers der Bremsscheibe die erfindungsgemäße Anordnung der vorderen und hinteren Ringflächenkante maßgeblich ist, ergeben sich für die konkrete Ausgestaltung der inneren Ringflächenform eine Vielzahl von Möglichkeiten.

So ist beispielsweise neben einer linearen Ausgestaltung, also, dass die innere Ringfläche ausgehend von der vorderen Flächenkante bis zur Stufe linear ansteigend verläuft, auch eine konkave Ausgestaltung denkbar, d.h., dass die innere Ringfläche ausgehend von der vorderen Flächenkante bis zur Stufe konkav verläuft.

Die lineare und konkave Ausgestaltung der Ringflächenform stellt keine abschließende Aufzählung dar, da die erfindungsgemäße Anordnung der vorderen und hinteren Ringflächenkanten der inneren Ringfläche noch weitere Ausgestaltungen ermöglicht.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

Die Erfindung wird im folgenden anhand des in der Zeichnung dargestellten Ausführungsbeispiels näher beschrieben. In der Beschreibung, in den Ansprüchen und in der Zeichnung werden die in der hinten angeführten Liste der Bezugszeichen verwendeten Begriffe und zugeordneten Bezugszeichen verwendet.

In der Zeichnung bedeutet:
- Fig. 1: eine Schnittdarstellung einer innenbelüfteten Bremsscheibe;
- Fig. 2: eine vergrößerte Einzelheit der Bremsscheibe aus Fig. 1, die gemäß dem Stand der Technik ausgeführt ist, und
- Fig. 3: die erfindungsgemäße Ausführung der Einzelheit aus Fig. 1.

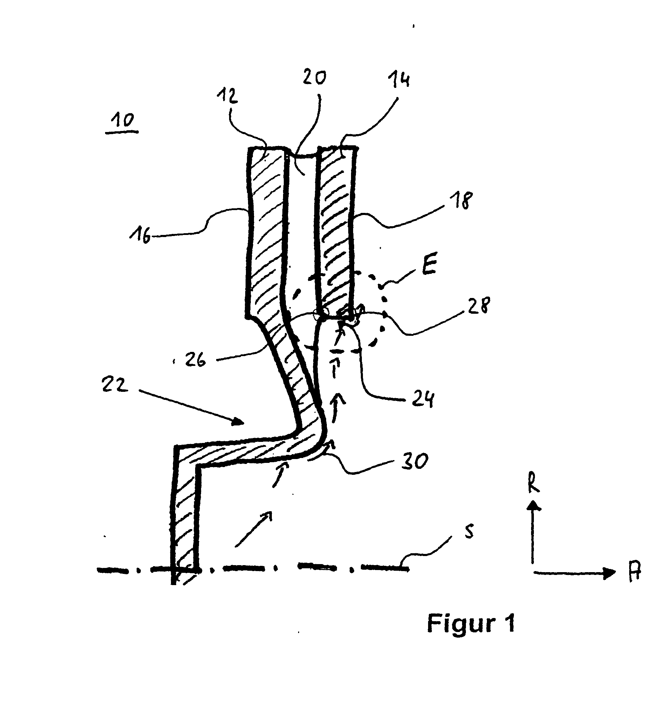

Die in Fig. 1 in Schnittdarstellung mehr oder minder schematisch dargestellte und insgesamt mit der Bezugsziffer 10 bezeichnete Bremsscheibe umfasst im Wesentlichen einen ersten Ringkörper 12 und einen zweiten Ringkörper 14.

In axialer Richtung A betrachtet weist die Bremsscheibe 10 eine dem ersten Ringkörper 12 zugeordnete vordere Reibfläche 16 und eine dem zweiten Ringkörper 14 zugeordnete hintere Reibfläche 18 auf.

Zwischen den beiden Ringkörpern 12, 14 sind in Umfangsrichtung mehrere, sich in radialer Richtung R erstreckende Kühlkanäle 20 angeordnet.

Zur Befestigung der Bremsscheibe 10 an einer, hier aus Gründen der Übersichtlichkeit nicht dargestellten, Radnabe ist der erste Ringkörper 12, in radialer Richtung R betrachtet, im Anschluss an die vordere Reibfläche 16 radial nach innen als ein topfförmiger Anschlussbereich 22 ausgebildet. Der zweite Ringkörper 14 ist radial nach innen im Anschluss an die Reibfläche 18 durch eine innere Ringfläche 24 abgeschlossen. Die innere Ringfläche 24 ist in axialer Richtung A betrachtet durch eine vordere Ringflächenkante 26 und eine hintere Ringflächenkante 28 begrenzt.

Durch Pfeile 30 ist ein möglicher Verlauf von Spritzwasser bei feuchtem Fahrbahnbelag dargestellt. Entsprechend den Pfeilen 30 kann Spritzwasser ausgehend von hier nicht dargestellten Achsteilen/Radnabe über den topfförmig ausgebildeten Anschlussbereich 22 auf die innere Ringfläche 24 gelangen.

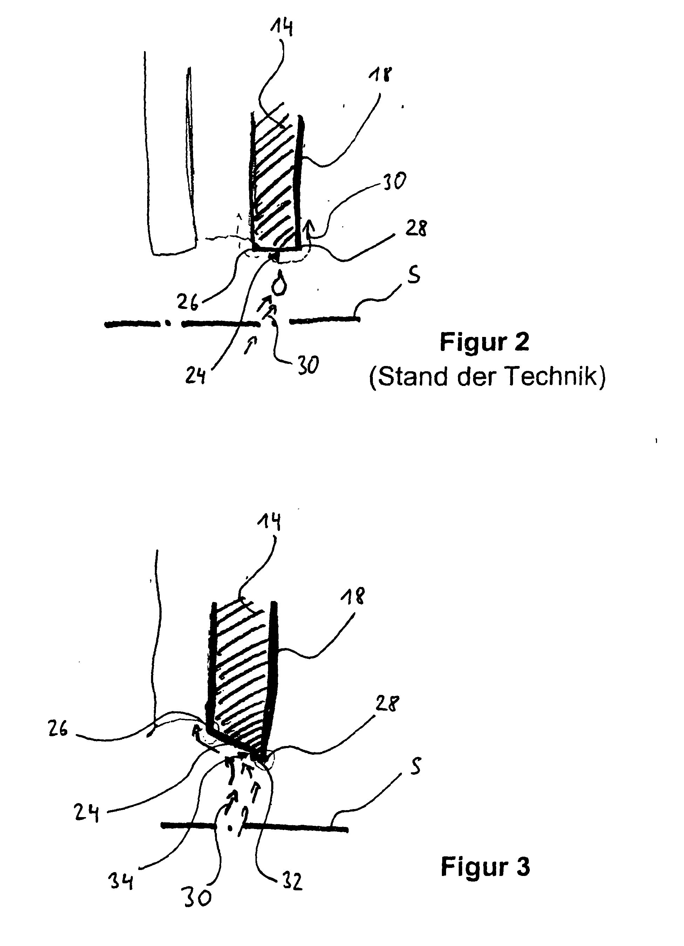

Eine durch einen strichliierten Kreis gekennzeichnete Einzelheit E aus Fig. 1 ist in Fig. 2 und Fig. 3 vergrößert dargestellt. Während Fig. 2 die Einzelheit E gemäß dem Stand der Technik zeigt, ist in Fig. 3 eine erfindungsgemäße Ausgestaltung der Einzelheit E dargestellt.

Nach dem in Fig. 2 dargestellten Stand der Technik ist die vordere Ringflächenkante 26 und die hintere Ringflächenkante 28 der inneren Ringfläche 24 in radialer Richtung R betrachtet, auf gleicher Höhe angeordnet, d.h., dass die innere Ringfläche 24 parallel zu einer mit S bezeichneten Symmetrieachse verläuft. Das gemäß den Pfeilen 30 auf die innere Ringfläche 24 auftretende Spritzwasser fließt von dort sowohl in die Kühlkanäle 20 als auch auf die hintere Reibfläche 18 des zweiten Ringkörpers 14. Das auf die hintere Reibfläche 18 des zweiten Ringkörpers 14 fließende Wasser führt zu einem Reibwertverlust zwischen Reibfläche und einem nicht weiter dargestellten Bremsbelag.

In Fig. 3 ist die Einzelheit E aus Fig. 1 mit der erfindungsgemäßen Ausgestaltung der inneren Ringfläche 24 dargestellt. Die vordere Ringflächenkante 26 ist in radialer Richtung R betrachtet weiter außen angeordnet als die hintere Ringflächenkante 28, d.h., dass die innere Ringfläche 24 in Bezug auf die Symmetrieachse S eine radial nach innen, schräg angestellte Ausrichtung hat.

Im Bereich um die hintere Ringflächenkante 28 ist zudem in der inneren Ringfläche 24 eine radial nach innen ausgerichtete Stufe 32 ausgebildet. Durch die Ausbildung der Stufe 32 weist die innere Ringfläche 24 eine zusätzliche Kante - Wasserscheidekante 34 - auf. Ausgehend von der vorderen Ringflächenkante 26 bis zur Stufe 32 ist die innere Ringfläche 24 linear ansteigend ausgeführt.

Dem von Achsteilen/Nabe gemäß den Pfeilen 30 über den topfförmigen Anschlussbereich 22 auf die innere Ringfläche 24 gelangenden Spritzwasser wird aufgrund der Wasserscheidekante 34 ein Auffließen auf die hintere Reibfläche 18 des zweiten Ringkörpers 14 erschwert. Stattdessen fließt das Spritzwasser aufgrund der radial nach innen, schräg angestellten Ausrichtung der inneren Ringfläche 24 über die innere Ringfläche 24 in Richtung der Kühlkanäle 20 ab.

Die Erfindung zeichnet sich dadurch aus, dass durch eine einfache konstruktive Gestaltung der inneren Ringfläche ein Auffließen von Wasser auf die hintere Reibfläche des zweiten Ringkörpers der Bremsscheibe vermieden wird.

### BEZUGSZEICHENLISTE

- 10: Bremsscheibe
- 12: erster Ringkörper
- 14: zweiter Ringkörper
- 16: vordere Reibfläche
- 18: hintere Reibfläche
- 20: Kühlkanäle
- 22: topfförmiger Anschlussbereich
- 24: innere Ringfläche
- 26: vordere Ringflächenkante
- 28: hintere Ringflächenkante
- 30: Spitzwasser
- 32: Stufe
- 34: Wasserscheidekante

- A: axiale Richtung
- R: radiale Richtung
- S: Symmetrielinie

## Patentansprüche

1. Innenbelüftete Bremsscheibe (10) für eine Scheibenbremse mit einem ersten und einem zweiten Ringkörper (12, 14) und einer in axialer Richtung (A) betrachteten dem ersten Ringkörper (12) zugeordneten vorderen Reibfläche (16) und einer dem zweiten Ringkörper (14) zugeordneten hinteren Reibfläche (18), und mehreren zwischen den beiden Ringkörpern (12, 14) in Umfangsrichtung angeordneten, sich in radialer Richtung (R) erstreckenden Kühlkanälen (20), wobei der zweite Ringkörper (14) im Anschluss an die hintere Reibfläche (18) radial nach innen durch eine innere Ringfläche (24), die in axialer Richtung (A) betrachtet durch eine vordere und einen hintere Ringflächenkante (26, 28) begrenzt ist, abgeschlossen ist, **dadurch gekennzeichnet, dass** die vordere Ringflächenkante (26) der inneren Ringfläche (24) radial weiter außen als die hintere Ringflächenkante (28) der inneren Ringfläche (24) angeordnet ist.

2. Bremsscheibe nach Anspruch 1, **dadurch gekennzeichnet, dass** die innere Ringfläche (24) im Bereich um die hintere Ringflächenkante (28) eine radial nach innen ausgerichtete Stufe (32) aufweist, die in der inneren Ringfläche (24) eine Wasserscheidekante (34) bildet.

3. Bremsscheibe nach Anspruch 1 und 2, **dadurch gekennzeichnet, dass** die innere Ringfläche (24) ausgehend von der vorderen Flächenkante (26) bis zur Wasserscheidekante (34) linear ansteigend verläuft.

4. Bremsscheibe nach Anspruch 1 und 2, **dadurch gekennzeichnet, dass** die innere Ringfläche (24) ausgehend von der vorderen Flächenkante (26) bis zur Wasserscheidekante (34) konkav verläuft.

5. Bremsscheibe nach einem der vorangehenden Ansprüche, **dadurch gekennzeichnet, dass** in radialer Richtung (R) betrachtet der erste Ringkörper (12) im Anschluss an die vordere Reibfläche (16) radial nach innen als ein topfförmiger Anschlussbereich (22) für die Befestigung der Bremsscheibe (10) an einer Radnabe ausgebildet ist.
